# DEMANDE DE BREVET EUROPEEN

(11) **EP 3 693 112 A1**
(43) Date de publication de la demande: **12.08.2020**
(21) Numéro de dépôt: 19156282.6
(22) Date de dépôt: 08.02.2019
(51) Int. Cl.: B23B 31/20, B23B 31/30, B23Q 1/76

(54) **DISPOSITIF DE SERRAGE DE BARRE À USINER POUR MACHINES-OUTILS, EN PARTICULIER POUR TOURS AUTOMATIQUES, BROCHE MATIÈRE POUR MACHINE-OUTIL ET MACHINE-OUTIL**

(71) Demandeur: Tornos SA, 2740 Moutier (CH)
(72) Inventeur: Droz, Fabrice, 2720 Tramelan (CH); Weber, David, 2873 Saulcy (CH)
(74) Mandataire: BOVARD AG

(57) **Abrégé**

La présente invention se rapporte à un dispositif de serrage (100, 200, 300) pour le serrage de pièces à usiner, par exemple dans un canon ou une broche matière pour machine-outil, comprenant des mâchoires de serrage (101) ou des mâchoires de guidage (301) déplaçables en translation le long d'une direction (B) essentiellement perpendiculaire à un axe de rotation (A) du dispositif de serrage (100, 200, 300) d'une position ouverte, dans laquelle les mâchoires de serrage (101) ou les mâchoires de guidage (301) n'exercent pas de force sur la pièce à usiner, à une position fermée, dans laquelle les mâchoires de serrage (101) ou les mâchoires de guidage (301) exercent une force sur la pièce à usiner. La translation des mâchoires de serrage (101) ou des mâchoires de guidage (301) est actionnable par la déformation mécanique en direction de l'axe (A) d'une membrane de serrage (102, 204a, 204b, 302), la déformation de la membrane de serrage (102, 204a, 204b, 302) étant actionnable par le changement de pression d'un fluide de travail. La présente invention se rapporte également à un canon et une broche matière pour machine-outil comprenant un tel dispositif de serrage et une machine-outil, par exemple un tour automatique, comprenant un tel dispositif de serrage et/ou tel canon ou une telle broche matière.

## Description

### Domaine technique de l'invention

La présente invention se rapporte au domaine des machines-outils, plus particulièrement au domaine des tours, par exemple des tours automatiques. Plus précisément, la présente invention se rapporte au domaine des dispositifs de serrage de pièces à usiner, en particulier des barres à usiner, pour machines-outils. Elle se rapporte encore plus précisément à un dispositif de serrage de pièces à usiner de type dit à pince. La présente invention se rapporte aussi à un canon et à une broche matière de machine-outil ainsi qu'une machine-outil comprenant un dispositif de serrage de pièces à usiner selon la présente invention.

### État de la technique

Lors de l'usinage de pièces mécaniques par des machines-outils, en particulier par des machines-outils de précision, il est primordial que la position relative de la pièce à usiner par rapport à l'outil d'usinage puisse être maintenue de façon absolument précise par la partie tournante appelée broche. Ceci est particulièrement important dans le cas de tours automatiques où les pièces à usiner sont entrainées en rotation à grande vitesse par rapport à un outil qui, lui, se déplace par rapport à l'axe de rotation du tour automatique. Afin que la pièce à usiner puisse être entrainée en rotation de manière adéquate et que la pièce ne se déplace pas de manière intempestive en translation le long ni en rotation autour de l'axe de rotation du tour pendant l'usinage, il est primordial que le dispositif de serrage qui fixe la pièce à usiner soit de grande qualité.

De nos jours, les machines-outils opèrent de plus en plus de manière automatique, ce qui permet d'atteindre une vitesse de production de plus en plus importante. Malgré cette automatisation, il est primordial que la sécurité des opérateurs des machines-outils soit garantie. Ainsi, il est important d'avoir des machines-outils qui, lors d'un arrêt dû à un malfonctionnement, à l'actionnement d'un dispositif d'alerte ou à une coupure généralisée d'énergie, s'arrêtent dans une configuration sécurisée, en particulier dans une configuration dans laquelle la pièce à usiner reste fixée.

Les dispositifs de serrage de pièces à usiner, par exemple pour tours automatiques, connus de l'art antérieur, sont pratiquement exclusivement basés sur un mécanisme de serrage axial, c'est-à-dire un mécanisme de serrage dans lequel le nécessaire mouvement essentiellement radial des mâchoires de serrage est obtenu par un mécanisme actionné essentiellement axialement. Ces mécanismes de serrage utilisent souvent des pinces de serrage comportant des mâchoires de forme tronconique. Pour atteindre un effet de serrage, la pince est poussée par une force de serrage contre une surface tronconique correspondante ce qui entraîne le serrage de la barre. Pour éviter le desserrage de la pince en cas de disparition de la force de serrage, il est notamment connu d'effectuer le serrage au moyen de ressort et pour le desserrage d'employer des moyens pneumatiques ou hydraulique. Cependant, afin d'atteindre une capacité de serrage suffisante, il est nécessaire d'employer des moyens ressort très forts, ce qui nécessite des moyens pneumatiques ou hydrauliques correspondants pour le desserrage. De tels dispositifs de serrage axiaux sont par exemple présentés dans les documents EP 0 213 075 et EP 1 004 379.

Bien que les systèmes de serrage axiaux soient faciles à implémenter, ils souffrent d'une limitation importante : Du fait de l'utilisation d'un moyen de serrage axial, les contraintes sur la barre lors de l'usinage peuvent entraîner un mouvement de cette dernière le long de l'axe de la broche, ce qui engendre des imprécisions dans la pièce usinée.

Afin de remédier à ce problème, des moyens de fixation de type radiaux ont été proposés, par exemple dans le document EP 1 607 774. Dans le mécanisme correspondant, des éléments piézo-électriques engendrent une force radiale sur les mâchoires de la pince de serrage. Bien que ce système soit convaincant sur le plan théorique, il ne fût jamais appliqué de manière pratique. En effet, l'utilisation d'éléments piézo-électriques implique quelques limitations importantes : Premièrement, il est difficile d'obtenir par ces moyens une force de serrage suffisante. En effet, des éléments piézo-électriques de très grandes dimensions et requérant des tensions électriques importantes pour les opérer sont nécessaires à cette fin. Deuxièmement, les éléments piézo-électriques sont délicats et les contraintes mécaniques dues à l'usinage peuvent facilement engendrer une rupture de ces éléments.

Il existe par conséquent un besoin pour un dispositif de serrage de pièces à usiner pour machines-outils, par exemple des tours automatiques, permettant un serrage de type radial tout en garantissant une force de serrage suffisante et une pérennité importante.

### Résumé de l'invention

Un but de la présente invention est donc de proposer un nouveau dispositif de serrage de pièces à usiner pour machines-outils, une nouvelle broche matière de machine-outil, ainsi qu'une machine-outil correspondante, permettant de surmonter les limitations mentionnées préalablement.

Selon la présente invention, ces buts sont atteints grâce aux objets des trois revendications indépendantes. Les aspects plus spécifiques de la présente invention sont en outre décrits dans les revendications dépendantes, ainsi que dans la description.

De manière plus spécifique, les buts de la présente invention sont atteints grâce à un dispositif de serrage pour le serrage de pièces à usiner, par exemple dans un canon ou une broche matière pour machine-outil, comprenant des mâchoires de serrage ou des mâchoires de guidage déplaçables en translation le long d'une direction essentiellement perpendiculaire à un axe de rotation du dispositif de serrage d'une position ouverte, dans laquelle les mâchoires de serrage ou les mâchoires de guidage n'exercent pas de force sur la pièce à usiner, à une position fermée, dans laquelle les mâchoires de serrage ou les mâchoires de guidage exercent une force sur la pièce à usiner, caractérisé en ce que la translation des mâchoires de serrage ou des mâchoires de guidage est actionnable par la déformation mécanique en direction de l'axe de rotation d'une membrane de serrage, la déformation de la membrane de serrage étant actionnable par le changement de pression d'un fluide de travail hydraulique ou pneumatique.

Le dispositif de serrage selon la présente invention permet de serrer radialement la pièce à usiner sans provoquer mouvements axiaux parasites. Grâce au fixage radial de la barre, les erreurs d'usinage relatives à l'utilisation d'un dispositif de serrage axial sont éliminées. De plus, la force de serrage des mâchoires de serrage peut facilement être ajustée en déformant de manière adéquate la membrane de serrage. L'utilisation d'un fluide de travail pour actionner la déformation de la membrane de serrage permet que le dispositif de serrage soit de construction simple et pérenne.

Dans un premier mode de réalisation préféré de la présente invention, le dispositif de serrage comprend au moins deux membranes de serrage. Avec au moins deux membranes de serrage, la force de serrage peut être augmentée mais cela permet surtout d'augmenter la rigidité angulaire par rapport à un système à une seule membrane et ainsi d'augmenter la précision d'usinage.

Dans un suivant mode de réalisation préféré de la présente invention, les membranes de serrage sont distribuées le long d'une direction parallèle à l'axe de rotation. Ainsi, la rigidité angulaire au basculement peut être augmentée par rapport à un système à membrane continue sur toute la longueur axiale de serrage et ainsi d'augmenter la précision d'usinage.

Dans un autre mode de réalisation préféré de la présente invention, les membranes de serrage sont distribuées de manière circonférentielle autour de l'axe de rotation. Ceci permet d'augmenter la force de serrage et d'adapter la direction de serrage à la forme spécifique de la barre. Une telle distribution des membranes de serrage peut être particulièrement intéressante lors du serrage d'une barre à profil rectangulaire ou carré.

Dans un encore autre mode de réalisation, les membranes de serrage sont en métal. Avec des membranes en métal, le risque d'un déplacement axial de la barre pendant l'usinage est minimisé.

Dans un mode de réalisation suivant de la présente invention, les membranes de serrage sont en acier. Avec des membranes en acier, le risque d'un déplacement axial de la barre pendant l'usinage est encore plus minimisé.

Dans un mode de réalisation suivant de la présente invention, les membranes de serrage sont en acier de type Maraging. Les aciers de type Maraging possèdent de très hautes limites élastiques et de fatigue. Grâce à ceci, les membranes de serrage ont une durée de vie en fatigue très longue ce qui permet d'utiliser le dispositif de serrage selon la présente invention dans de applications de décolletage qui peuvent nécessiter d'activer les membranes au moins une fois par seconde.

Dans encore un autre mode de réalisation de la présente invention, les membranes de serrage ont une épaisseur entre 0.05 mm et 1 mm, de préférences entre 0.05 mm et 0.5 mm et plus avantageusement entre 0.10 mm et 0.15mm.

Dans un autre mode de réalisation de la présente invention, les membranes de serrages ont un module de Young entre 150 GPa et 250 GPa, de préférence entre 180 GPa et 220 GPa, avantageusement entre 190 GPa et 210 GPa.

Dans un autre mode de réalisation de la présente invention, les membranes de serrage sont déformables dans la direction perpendiculaire à l'axe de rotation d'une longueur d'au moins 20 µm, avantageusement d'au moins 30 µm, et encore plus favorablement d'au moins 50 µm.

Dans encore un autre mode de réalisation de la présente invention, les mâchoires de serrage ou les mâchoires de guidage sont interchangeables. Cela permet d'adapter les mâchoires de serrage à la taille, plus particulièrement au diamètre, de la barre à usiner mais aussi à sa forme.

Les buts de l'invention sont aussi atteints grâce à un canon ou une broche matière pour machine-outil comprenant un dispositif de serrage selon la présente invention.

Dans un premier mode de réalisation préféré de ces deuxième et troisième aspects de la présente invention, la pression du fluide de travail est ajustable par le déplacement en translation d'un piston de travail et le canon ou la broche matière sont caractérisés en ce que le déplacement en translation du piston de travail est contrôlable en modifiant la pression d'un fluide de contrôle agissant sur un piston pneumatique, et en ce que le canon ou la broche matière comprennent au minimum un ressort configuré pour entrainer en translation le piston de travail de telle façon que les mâchoires de serrage ou les mâchoires de guidage se trouvent dans leur position fermées lorsque la pression du fluide de contrôle agissant sur le piston pneumatique est nulle.

Grâce à un tel canon ou à une telle broche matière, il est possible de contrôler le serrage de la pièce à usiner facilement grâce à l'aide d'un fluide de contrôle et plus précisément en changeant la pression de ce fluide de contrôle. De plus, grâce à la présence du ressort, il est garanti que les mâchoires de serrage se trouvent dans leurs positions fermées, c'est-à-dire la position dans laquelle la pièce à usiner reste fixée, lorsque la pression du fluide de contrôle est nulle. Ainsi, lors d'une coupure d'alimentation d'énergie ou lors de l'arrêt d'urgence de la machine-outil et de la source en fluide de contrôle, la pièce est fixée et la sécurité des opérateurs de la machine-outil est garantie.

Dans un suivant mode de réalisation de la présente invention, le canon ou la broche matière comprennent un couplage magnétique, comportant un premier élément magnétique et un deuxième élément magnétique, placés entre un rotor de broche entrainable en rotation autour de l'axe de rotation et un support de broche fixe. Grâce au couplage magnétique, il est facile d'entrainer en rotation la pièce à usiner tout en permettant d'ajuster aisément la pression du fluide de travail qui permet d'actionner le dispositif de serrage de la barre à usiner.

Dans un autre mode de réalisation de la présente invention, le deuxième élément magnétique du couplage magnétique est lié au piston pneumatique et le premier élément magnétique est configuré pour entrainer en translation le piston de travail. Grâce à ceci, il est facile de transformer une translation du piston pneumatique en une translation du piston de travail.

A cet endroit, il faut noter que les buts de la présente invention sont également réalisés par une machine-outil qui comprend un dispositif de serrage et/ou un canon ou une broche matière selon la présente invention.

### Brève description des dessins

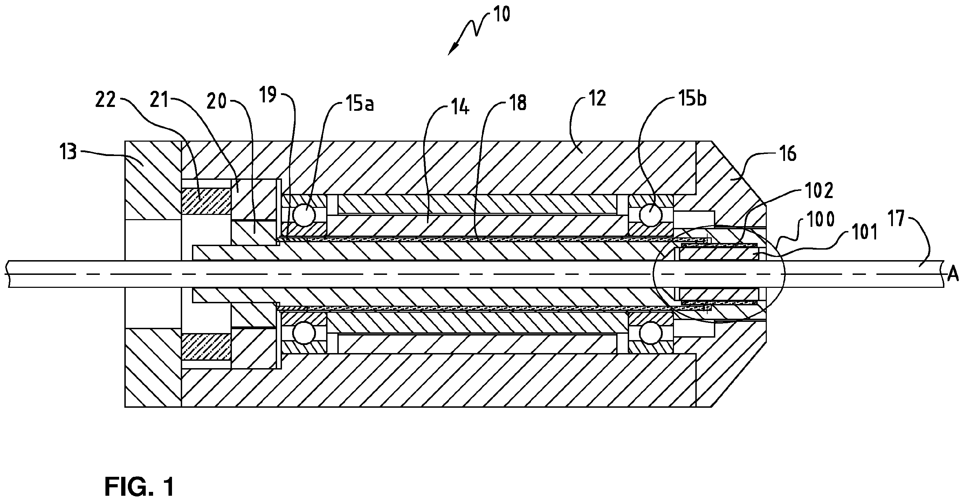

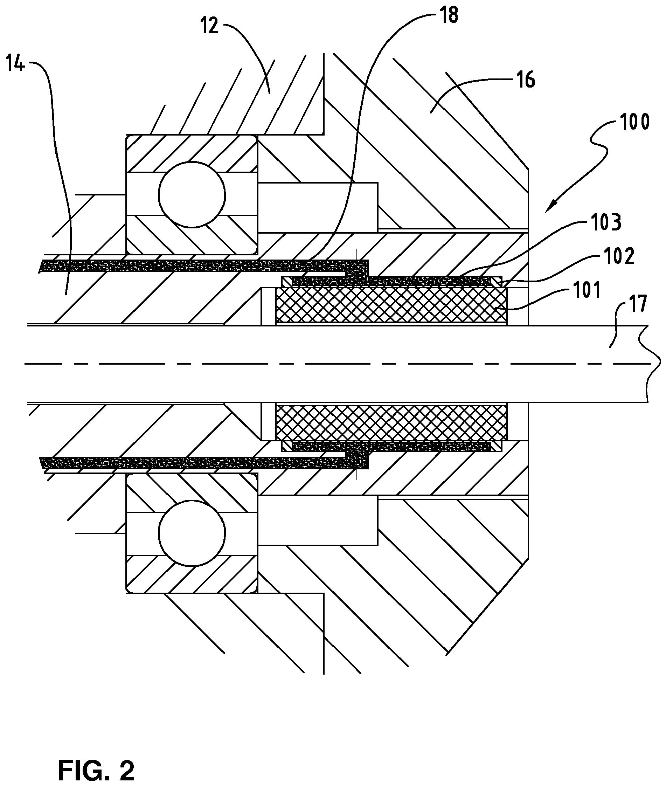

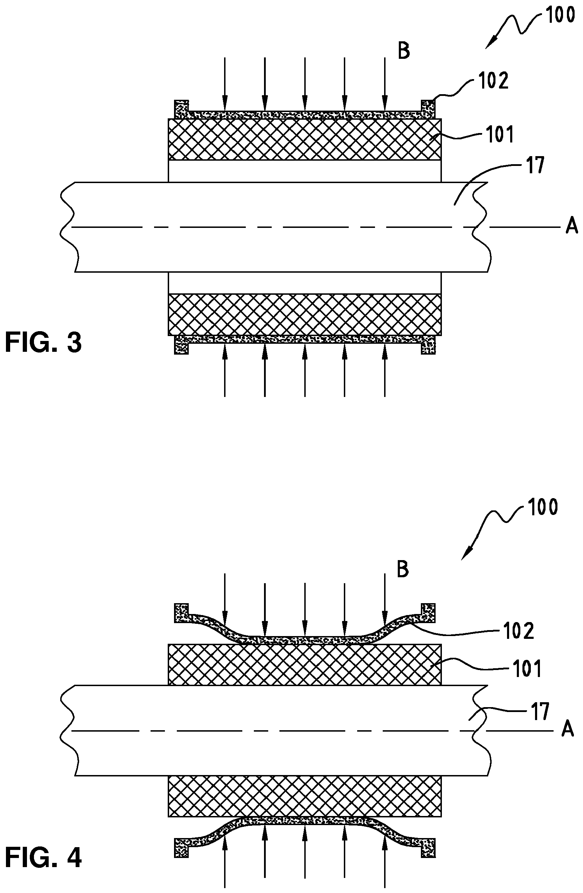

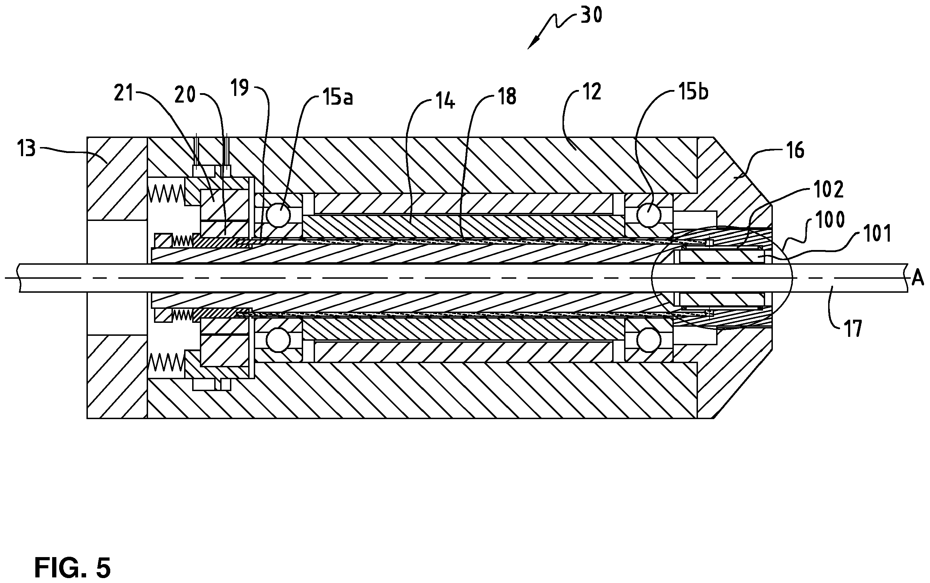

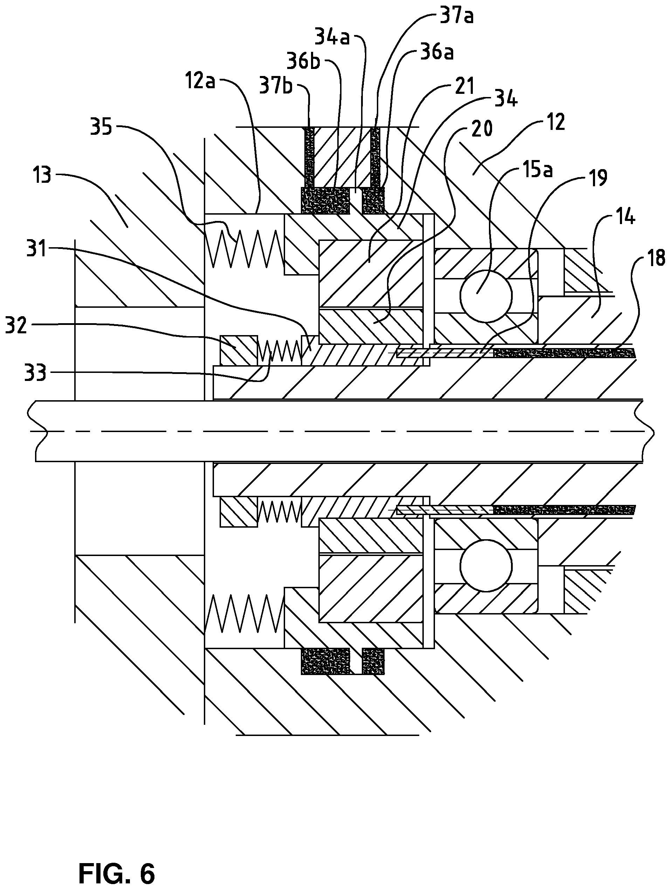

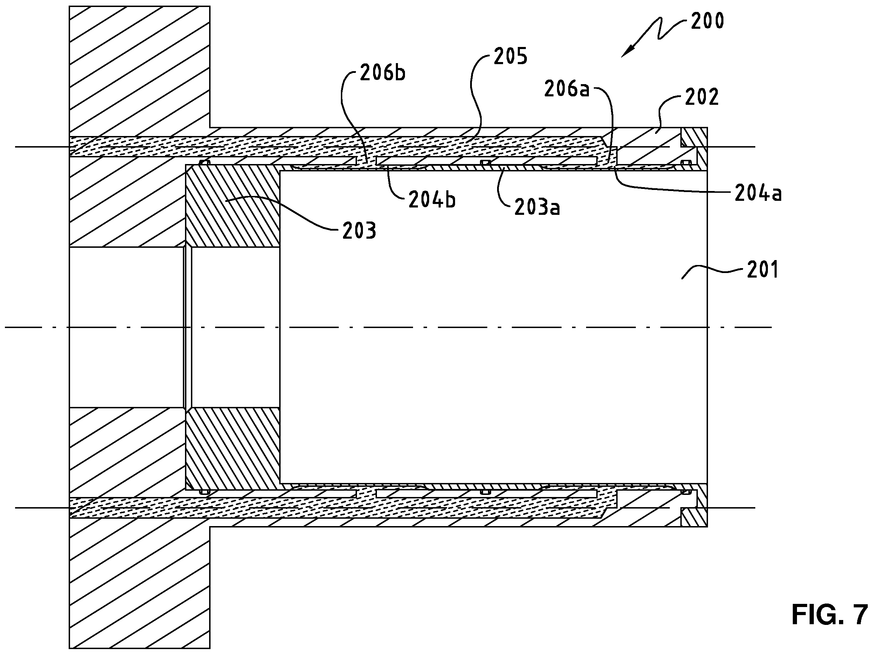

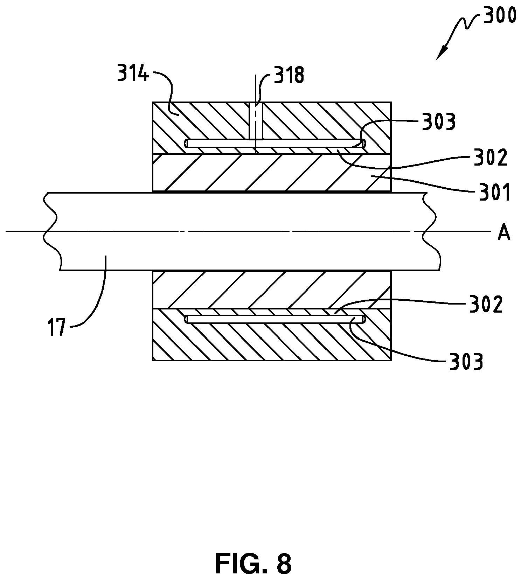

Les particularités et les avantages de la présente invention apparaîtront avec plus de détails dans le cadre de la description qui suit avec un exemple de réalisation donné à titre illustratif et non limitatif en référence aux sept dessins ci-annexés qui représentent :
▪ la figure 1 une vue en coupe d'une broche matière selon un premier mode de réalisation de la présente invention ;
▪ la figure 2 une vue en coupe du dispositif de serrage selon un premier mode de réalisation de la présente invention ;
▪ la figure 3 le dispositif de serrage de la figure 2 dans sa position ouverte ;
▪ la figure 4 le dispositif de serrage de la figure 2 dans sa position fermée ;
▪ la figure 5 une vue en coupe d'une broche matière selon un deuxième mode de réalisation de la présente invention ;
▪ la figure 6 une vue en coupe du dispositif de régulation de la pression hydraulique de la broche matière de la figure 5 ;
▪ la figure 7 une vue en coupe du dispositif de serrage selon un deuxième mode de réalisation de la présente invention ; et
▪ la figure 8 une vue en coupe du dispositif de serrage selon un troisième mode de réalisation de la présente invention.

### Description détaillée de l'invention

La figure 1 présente une vue en coupe d'une broche matière 10 selon un premier mode de réalisation de la présente invention comprenant un dispositif de serrage de pièces à usiner 17 lui aussi selon un premier mode de réalisation de la présente invention. La broche matière 10 comprend un support de broche 12 qui est une partie fixe. Le support de broche 12 fait une partie intégrale d'une machine-outil ou est fixée, par des moyens connus de l'homme du métier, à une flasque 13 d'une machine-outil telle que par exemple un tour automatique. Un rotor de broche 14 est disposé co-axialement au support de broche 12, et est supporté par deux jeux de roulements à billes 15a et 15b qui permettent la rotation du rotor de broche 14 relativement au support de broche 12 autour de l'axe longitudinal A de la broche. Les roulements à billes 15a et 15b interdisent quelconque déplacement axial du rotor de broche 14 par rapport au support de broche 12.

A l'extrémité de la broche matière 10 opposée à la flasque 13, se trouve un couvercle de broche 16 qui est fixé de manière amovible au support de broche 12 par des moyens connus de l'homme du métier. Le couvercle de broche 16 entoure et protège le dispositif de serrage 100 qui est configuré de façon à pouvoir fixer ou libérer la pièce à usiner 17, qui dans cette figure prend la forme d'une barre à usiner.

La broche matière 10 comprend donc le dispositif de serrage 100 qui est prévu pour pouvoir fixer et libérer la barre à usiner 17. Comme déjà mentionné ci-dessus, une fixation optimale est primordiale pour atteindre une qualité de la pièce usinée maximale. Il est notamment essentiel que la barre soit suffisamment bien fixée pour qu'elle puisse tourner à haute vitesse par rapport à un outil (non montré ici). Il est aussi indispensable que la barre soit fixée en translation le long de l'axe A. En effet, toute translation ou rotation par rapport au rotor de broche intempestive de la barre 17 pendant l'usinage impliquerait une baisse de précision dans l'usinage.

En référence aux figures 2 à 4, le principe de fonctionnement du dispositif de serrage 100 sera maintenant expliqué.

Comme on peut le voir dans la figure 2, le dispositif de serrage 100 comprend des mâchoires de serrage 101 et une membrane de serrage 102. La figure 3 montre le dispositif de serrage 100 dans sa configuration ouverte, c'est-à-dire quand la barre à usiner 17 est libérée, alors que la figure 4 présente le dispositif de serrage 100 dans sa configuration fermée, c'est-à-dire quand celle-ci maintient la barre à usiner 17. Afin de déplacer les mâchoires de serrage 101 le long d'une direction essentiellement perpendiculaire à l'axe de rotation A du dispositif 10, une pression hydraulique est appliquée sur la membrane de serrage 102. Comme on peut le voir dans la figure 4, une augmentation de la pression hydraulique engendre une déformation de la membrane 102 dans la direction des flèches B, ce qui déplace les mâchoires 101 en direction de la barre 17. En maintenant la pression hydraulique haute, il est possible de fixer de manière optimale la barre 17 afin que celle-ci puisse être entrainée en rotation et usinée avec précision. La force de fixation des mâchoires 101 sur la barre 17 peut être régulée en ajustant la pression d'un fluide de travail agissant sur la membrane 102. Bien que les mâchoires 101 soient schématiquement représentées par des blocs continus dans cette figure, il est clair pour un homme du métier que les mâchoires 101 peuvent prendre des formes diverses et faire partie par exemple de la pince de serrage sans départir du principe d'une force de serrage engendrée par la déformation de la membrane de serrage 102. De manière similaire, la membrane 102 peut être prévue soit comme étant une membrane continue le long de toute la circonférence de la barre 17, soit comme une membrane formée de plusieurs domaines distincts de long de cette circonférence.

Une huile hydraulique connue de l'homme du métier peut être utilisée pour engendrer la pression sur la ou les membranes de serrage 102, il est aussi possible d'utiliser un autre fluide de travail, tel que de l'air comprimé, pour engendrer la déformation de la ou des membranes de serrage 102.

Comme illustré dans la figure 2, le fluide de travail, par exemple de l'huile hydraulique, se trouve dans l'espace 103 situé entre les membranes 102 et le rotor de broche 14, ainsi que dans le canal 18 qui relie l'espace 103 à un piston de travail 19 grâce auquel la pression de l'huile hydraulique peut être ajustée (cf. figure 1). Le piston de travail 19 est fixé à un premier élément magnétique 20 qui est placé en face d'un deuxième élément magnétique 21. Les premier et deuxième éléments magnétiques 20 et 21, qui forment un couplage magnétique, sont avantageusement des aimants permanents. Il se peut aussi qu'un seul des deux éléments magnétiques 20 et 21 soit effectivement un aimant. Dans ce cas, l'autre élément est dans un matériau magnétisable ou un électro-aimant.

La pression hydraulique sur les membranes de serrage 102 peut donc être ajustée par le piston de travail 19 et plus précisément par le déplacement en translation du premier élément magnétique 20 le long d'une direction parallèle à l'axe A. Le déplacement du premier élément magnétique 20 peut être obtenu par le déplacement du deuxième élément magnétique 21 le long d'une direction parallèle à l'axe A. Le déplacement en translation du deuxième élément magnétique 21 est, dans cet exemple, obtenu grâce à un actionneur 22, par exemple un actionneur hydraulique ou électrique.

On peut ainsi résumer le fonctionnement de la broche matière 10 pour actionner le dispositif de serrage 100 : Pour fermer le dispositif de serrage 100, l'actionneur 22 déplace le deuxième élément magnétique 21 en direction du dispositif de serrage 100, ce qui entraîne le premier élément magnétique 20 dans la même direction. Le piston de travail 19 qui est solidaire de l'élément magnétique 20 augmente la pression de l'huile hydraulique, ce qui implique la déformation des membranes de serrage 102 et le déplacement des mâchoires de serrage 101 en direction de la barre à usiner 17. Afin de relâcher la barre 17, il suffit de réduire la pression de l'huile hydraulique en rétractant l'élément magnétique 20 par l'intermédiaire de l'élément magnétique 21 et de l'actionneur 22.

La figure 5 illustre une broche matière 30 selon un deuxième mode de réalisation de la présente invention. Les éléments de la broche matière 30 qui ont déjà été décrits plus haut en relation avec la description de la broche matière 10 conservent leur numéro de référence dans les figures 5 et 6. Ainsi, on reconnaît entre autres le support de broche 12, ainsi que le rotor de broche 14 qui peut être entrainé en rotation. La broche matière 30 comprend également un dispositif de serrage 100 identique à celui présenté plus haut. La broche matière 30 se distingue de la broche matière 10 par la façon par laquelle la pression hydraulique sur les membranes de serrage 102 du dispositif de serrage 100 est engendrée et régulée.

La figure 6 présente une vue en coupe détaillée du mécanisme de régulation de pression hydraulique de la broche matière 30. Dans cette figure, on reconnaît le support de broche 12, les roulements à billes 15a et le rotor de broche 14. On reconnaît également le canal 18 qui contient le fluide de travail et qui relie le dispositif de serrage 100 au piston de travail 19 et aux premier et deuxième éléments magnétiques 20 et 21. Dans le mode de réalisation de la figure 6, le piston de travail 19 n'est pas directement lié avec le premier élément magnétique 20 mais est relié à un patin 31 qui est solidaire avec le premier élément magnétique 20. Un homme du métier comprendra que le piston de travail 19 pourrait tout aussi bien être directement relié au premier élément magnétique 20 sans pour autant entrainer un changement dans le mode de fonctionnement du dispositif de régulation de pression hydraulique de la broche matière 30. Le patin 31 est agencé sur le rotor de broche 14 de telle façon qu'il puisse se déplacer en translation par rapport à celui-ci selon une direction parallèle à l'axe de rotation A de la broche matière 30.

Comme illustré dans la figure 6, la broche matière 30 comprend également une protubérance de rotor de broche 32 et un ressort de premier élément magnétique 33 placé entre le patin 31 et la protubérance 32. De manière similaire, le deuxième élément magnétique 21 est relié à un piston pneumatique 34 qui est agencé de telle manière à pouvoir être déplacé en translation le long d'une direction parallèle à l'axe de rotation A de la broche matière 30 sur ou à proximité de la surface interne 12a du support de broche 12. Le dispositif de régulation comporte également un ressort de deuxième élément magnétique 35 situé entre la flasque 13 et le piston pneumatique 34. Ce dernier comporte une protubérance de piston pneumatique 34a. Cette protubérance de piston pneumatique 34a est dimensionnée de telle sorte qu'elle partage une enceinte de pression 36, formée entre le support de broche 12 et le piston pneumatique 34, en deux sous-enceintes de pression 36a et 36bLa sous-enceinte d'entrée 36a est reliée à l'orifice d'entrée 37a et la sous-enceinte de sortie 36b est reliée à l'orifice de sortie 37b.

Comme mentionné ci-dessus, le dispositif de serrage 100 de la broche matière 30 est identique au dispositif de serrage présenté dans les figures 3 et 4. Grâce au dispositif de régulation de la broche matière 30, la force de serrage des mâchoires de serrage 101 sur la barre à usiner 17 peut facilement être ajustée en modifiant la pression d'un fluide de contrôle agissant sur le piston pneumatique 34 en adaptant la pression relative des sous-enceintes 36a et 36b.

D'un point de vue pratique, la pression du fluide de travail, et donc la force de serrage des mâchoires 101, peut être ajustée en introduisant, par l'intermédiaire de l'orifice d'entrée 37a, dans la sous-enceinte d'entrée 36a un fluide de contrôle sous pression, par exemple de l'air comprimé. Le fluide de contrôle agit sur le piston pneumatique 34 et, lorsque la pression du fluide de contrôle est suffisante pour surmonter la force des ressorts 33 et 35, produit le déplacement du piston pneumatique 34 et du deuxième élément magnétique 21 en direction de la flasque 13. En réaction au déplacement du deuxième élément magnétique 21, le premier élément magnétique 20 se déplace également entrainant avec lui le patin 31 et le piston de travail 19, ce qui réduit finalement la pression hydraulique sur les membranes de serrage 102. En adaptant la pression du fluide de contrôle agissant sur le piston pneumatique 34 on peut donc ajuster la pression du fluide de travail et donc la force de serrage du dispositif 100.

A noter que le même résultat pourrait être atteint non pas en augmentant la pression dans la sous-enceinte d'entrée 36a mais en diminuant la pression dans la sous-enceinte de sortie 36b. Dès lors, il devient évident que c'est plus la différence de pression entre les deux sous-enceintes 36a et 36b qui détermine la pression du fluide de travail que la valeur absolue de la pression dans une des sous-enceintes. D'un point de vue pratique, il est plus facile d'ajuster rapidement la pression dans la sous-enceinte d'entrée 36a en introduisant le fluide de contrôle ayant une pression plus importante que la pression atmosphérique et de laisser la sous-enceinte de sortie 36b tout le temps à pression atmosphérique. Il a été observé que grâce au dispositif de régulation de la broche matière 30 les mâchoires de serrage 101 peuvent se déplacer de leurs positions fermées à leurs positions ouvertes, et inversement, en moins de 0.1 seconde en introduisant de l'air comprimé avec une pression de plusieurs bars dans la sous-enceinte d'entrée 36a.

Il est essentiel de noter que les ressorts 33 et 35, en particulier le ressort 33, sont configurés de telle sorte qu'ils engendrent sur le piston de travail 19 une force suffisante pour que la pression hydraulique sur les membranes de serrage 102 et donc sur les mâchoires de serrage 101 soit suffisante pour que le dispositif de serrage 100 soit dans sa position fermée, si les sous-enceintes 36a et 36b sont à pression égales, par exemple lorsque la pression du fluide de contrôle est nulle.

La pression nécessaire pour déplacer le piston pneumatique 34 en direction de la flasque 13 peut facilement être produite, par exemple, par un compresseur relié à l'orifice d'entrée 37a. Lors d'une coupure d'alimentation qui engendrerait l'arrêt du tour automatique ainsi que du compresseur, le dispositif de serrage 100 prendrait automatiquement, sous l'action des ressorts 33 et 35, sa configuration dans laquelle les mâchoires de serrage 101 sont fermées.

Lors de nombreux tests du dispositif de régulation de pression hydraulique de la broche matière 30, il a été observé qu'il est particulièrement avantageux d'avoir de ressorts 33 et/ou 35 qui développent une force totale sur le piston de travail 19 importante afin que le dispositif de serrage 100 se ferme rapidement lorsque la pression du fluide contrôle est nulle. Avec des ressorts 33 et 35 qui développent une telle force, la pression du fluide de contrôle nécessaire pour ouvrir le dispositif de serrage 100 et libérer la barre à usiner 17 est d'environ 6 bars. Bien évidemment, la valeur exacte dépend de nombreux paramètres, mais un homme du métier n'aura pas de peine à déterminer la pression la plus adéquate.

La figure 7 montre un dispositif de serrage 200 selon un deuxième mode de réalisation de la présente invention. Pour faciliter la compréhension de la structure et du fonctionnement du dispositif 200, les mâchoires de serrage ne sont pas apparentes dans cette figure. Un homme du métier comprendra cependant sans peine que les mâchoires de serrage peuvent être conçues par exemple comme faisant parties d'une pince de serrage. Afin d'accommoder des diamètres de barres à usiner, différents les mâchoires de serrage ou la pince de serrage peuvent être échangées et placée dans l'espace 201 du dispositif 200.

Le dispositif de serrage 200 comprend un fourreau 202 ainsi qu'un corps de membranes de serrage 203. Le fourreau 202 peut être prévu soit comme étant une pièce séparée du rotor de broche 14, soit comme faisant partie de ce dernier. Le corps de membranes de serrage 203 est de préférence en forme de U (couché dans cette figure) et possède en deux régions une épaisseur fortement réduite. Dans ces deux régions, le corps de membranes de serrage 203 forme deux membranes de serrage 204a et 204b.

Comme on peut le distinguer dans la figure 7, un canal 205 est prévu dans le fourreau 202. Le canal 205 est relié aux espaces 206a et 206b formés entre le fourreau 202 et les membranes de serrage 204a et 204b. Le canal 205 ainsi que les espaces 206a et 206b sont remplis d'un fluide de travail. De manière similaire au premier mode de réalisation, une augmentation de la pression du fluide de travail entraine la déformation des membranes de serrage 204a et 204b et ainsi le déplacement des mâchoires de serrage en direction de la barre à usiner.

Comme on peut le constater, le dispositif de serrage 200 est caractérisé par la présence de deux zones distinctes, formant les membranes de serrage 204a et 204b, qui sont séparées par une partie 203a du corps de membranes de serrage 203. Cette partie 203a ainsi que le corps de membranes de serrage 200 sont encastrés dans le fourreau. Le fait d'avoir deux membranes de serrage 204a et 204b séparées axialement permet d'augmenter la rigidité angulaire au basculement par rapport à un système à membrane continue sur toute la longueur axiale de serrage et ainsi d'augmenter la précision d'usinage.

Comme mentionné plus haut, le fourreau 202 peut être prévu comme une pièce séparée du rotor de broche 14. Ainsi, le dispositif de serrage 200 comprenant le corps de membranes de serrage 203 forme une sorte de cartouche amovible de la broche. Cette cartouche est fixée de manière précise axialement et radialement au rotor de broche 14 de la broche matière 10 ou de la broche matière 30.

Le dispositif de serrage 200 peut être intégré à un canon de guidage pour machines-outils et permet l'ajustement du diamètre de guidage. Dans un tel cas le dispositif de serrage comprend à la place des mâchoires de serrage (101) des mâchoires de guidage (301). De plus, quand le dispositif de serrage 200 est intégré à un canon de guidage les mâchoires de guidage 301 peuvent être aisément changées.

Il est import de noter que, bien que le dispositif 200 de la figure 7 présente deux zones de déformation 204a et 204b, il est concevable de prévoir un nombre différent de zones de déformation.

La liaison mécanique entre le fourreau 202 et le corps de membrane de serrage 203 peut être effectué par plusieurs moyens, par exemple par brasage, frettage ou soudage. Il est également possible de prévoir un joint O-ring afin d'assurer l'étanchéité des espaces 206a et 206b.

Afin de pouvoir assurer un force de serrage suffisante tout en garantissant que les mâchoires de serrage ne puissent pas se déplacer axialement, le corps de membranes de serrage 203 et donc les membranes de serrage 204a et 204b sont prévus en métal, plus particulièrement en acier. De préférence, un acier Maraging à très haute limite élastique et fatigue est utilisé. L'utilisation d'un matériau spécifique est nécessaire car des déformations de dimensions importantes en direction de l'axe A sont nécessaires. Afin d'accommoder des barres à usiner dont les diamètres peuvent varier, les membranes de serrage doivent pouvoir se déformer en direction de l'axe A sur une longueur de minimum 20 µm ou plus avantageusement de minimum 30 µm. De plus, le matériau doit posséder une durée de vie en fatigue très longue étant donné que certaines applications de décolletage peuvent nécessiter d'activer les membranes une fois par seconde. A côté d'aciers de haute gamme tel que des aciers Maraging, il est également possible d'utiliser des verres métalliques pour réaliser les membranes 204a et 204b.

Comme mentionné plus haut, il est important de noter que le dispositif de serrage selon la présente invention peut être également utilisé dans un canon de machine-outil. La figure 8 présente un dispositif de serrage 300 utilisé dans un canon de guidage. De manière similaire aux dispositifs 100 et 200, les mâchoires de guidage 301 du dispositif 300 peuvent être déplacées en direction de l'axe de rotation A de la barre 17 par l'intermédiaire de la membrane de serrage 302. Bien que dans la figure 8 uniquement une membrane de serrage 302 soit illustrée, il va de soi qu'un nombre différent de membranes est possible dans le cadre de la présente invention. Afin de provoquer la déformation de la membrane de serrage 302 et finalement le déplacement des mâchoires de guidage 301, la pression d'un fluide de travail présent dans le canal 303 du corps de canon 314 peut être ajustée par l'intermédiaire d'un dispositif similaire à celui présenté dans les figure 5 et 6. La pression du fluide de travail peut donc par exemple être ajustée par le déplacement en translation d'un piston de travail. Un couplage magnétique entre le corps de la machine-outil et le piston de travail peut être prévu aussi dans ce cadre. Comme illustré dans la figure 8, le fluide de travail est introduit dans le canal 303 par l'orifice 318. Afin de répondre aux exigences spécifiques pour l'utilisation du dispositif de serrage selon la présente invention dans un canon de guidage, les membranes de serrage 302 sont choisies avantageusement plus épaisses que lors de l'utilisation du dispositif de serrage dans une pince de serrage.

Il est évident que la présente invention est sujette à de nombreuses variations quant à sa mise en oeuvre. Bien que des modes de réalisation non limitatifs aient été décrits à titre d'exemple, on comprend bien qu'il n'est pas concevable d'identifier de manière exhaustive toutes les variations possibles. Il est bien sûr envisageable de remplacer un moyen décrit par un moyen équivalent sans sortir du cadre de la présente invention. Toutes ces modifications font partie des connaissances communes d'un homme du métier dans le domaine des dispositifs de serrage pour machines-outils. Il est particulièrement important de noter que les dispositifs de serrage 100, 200 et 300 doivent être appréciés indépendamment des broches matières 10 et 30. En effet, bien que les broches matières 10 et 30 soient des objets de la présente invention, d'autres dispositifs de régulations de la pression fluidique qui engendre l'actionnement des dispositifs de serrage 100 et 200 peuvent être mis en place sans pour autant engendrer un changement du mode de fonctionnement des dispositif 100 et 200.

## Revendications

1. Dispositif de serrage (100, 200, 300) pour le serrage de pièces à usiner, par exemple dans une broche matière ou dans un canon de machine-outil, comprenant des mâchoires de serrage (101) ou des mâchoires de guidage (301) déplaçables en translation le long d'une direction (B) essentiellement perpendiculaire à un axe de rotation (A) du dispositif de serrage (100, 200, 300) d'une position ouverte, dans laquelle les mâchoires de serrage (101) ou les mâchoires de guidage (301) n'exercent pas de force sur la pièce à usiner, à une position fermée, dans laquelle les mâchoires de serrage (101) ou les mâchoires de guidage (301) exercent une force sur la pièce à usiner,
**caractérisé en ce que**
la translation des mâchoires de serrage (101) ou des mâchoires de guidage (301) est actionnable par la déformation mécanique selon la direction (B) et en direction de l'axe (A) d'une membrane de serrage (102, 204a, 204b, 302), la déformation de la membrane de serrage (102, 204a, 204b, 302) étant actionnable par le changement de pression d'un fluide de travail.

2. Dispositif de serrage (100, 200, 300) selon la revendication 1, comprenant au moins deux membranes de serrage (102, 204a, 204b, 302).

3. Dispositif de serrage (100, 200, 300) selon l'une des revendications 1 ou 2, dans lequel les membranes de serrage (102, 204a, 204b, 302) sont distribuées le long d'une direction parallèle à l'axe de rotation (A).

4. Dispositif de serrage (100, 200, 300) selon l'une des revendications 1 ou 2, dans lequel les membranes de serrage (102, 204a, 204b, 302) sont distribuées de manière circonférentielle autour de l'axe de rotation (A).

5. Dispositif de serrage (100, 200, 300) selon l'une des revendications précédentes, **caractérisé en ce que** les membranes de serrage (102, 204a, 204b, 302) sont en métal.

6. Dispositif de serrage (100, 200, 300) selon l'une des revendications précédentes, **caractérisé en ce que** les membranes de serrage (102, 204a, 204b, 302) sont en acier.

7. Dispositif de serrage (100, 200, 300) selon la revendication 6, **caractérisé en ce que** l'acier est de type Maraging.

8. Dispositif de serrage (100, 200, 300) selon l'une des revendications précédentes, **caractérisé en ce que** les membranes de serrage (102, 204a, 204b, 302) ont une épaisseur entre 0.05 mm et 1 mm, de préférences entre 0.05 mm et 0.5 mm et plus avantageusement entre 0.10 mm et 0.15mm.

9. Dispositif de serrage (100, 200, 300) selon l'une des revendications précédentes, **caractérisé en ce que** les mâchoires de serrage (101) ou les mâchoires de guidage (301) sont interchangeables.

10. Canon de machine-outil comprenant un dispositif de serrage (100, 200, 300) selon une des revendications 1 à 9.

11. Broche matière (10, 30) pour machine-outil comprenant un dispositif de serrage (100, 200, 300) selon une des revendications 1 à 9.

12. Canon selon la revendication 10 ou broche matière (30) selon la revendication 11, dans lesquels la pression du fluide de travail est ajustable par le déplacement en translation d'un piston de travail (19), **caractérisés en ce que** le déplacement en translation du piston de travail (19) est contrôlable en modifiant la pression d'un fluide de contrôle agissant sur un piston pneumatique (34), et **en ce que** le canon ou la broche matière (30) comprennent au minimum un ressort (33, 35) configuré pour entrainer en translation le piston de travail (19) de telle façon que les mâchoires de serrage (101) ou les mâchoires de guidage (301) se trouvent dans leur position fermées lorsque la pression du fluide de contrôle agissant sur le piston pneumatique (34) est nulle.

13. Canon ou broche matière (30) selon la revendication 12, **caractérisés en ce qu'**ils comprennent un couplage magnétique, comportant un premier élément magnétique (20) et un deuxième élément magnétique (21), placés entre un rotor de broche (14) entrainable en rotation autour de l'axe de rotation (A) et un support de broche (12) fixe.

14. Canon ou broche matière (30) selon la revendication 13, **caractérisés en ce que** le deuxième élément magnétique (21) du couplage magnétique est lié au piston pneumatique (34) et le premier élément magnétique (20) est configuré pour entrainer en translation le piston de travail (19).

15. Machine-outil, par exemple un tour automatique, **caractérisée en ce qu'**elle comprend un dispositif de serrage (100, 200, 300) selon l'une des revendications 1 à 11 et/ou un canon ou une broche matière (10, 30) selon l'une des revendications 10 à 14.
